# EUROPÄISCHE PATENTANMELDUNG

(11) **EP 1 076 083 A1**
(43) Veröffentlichungstag der Anmeldung: **14.02.2001**
(21) Anmeldenummer: 00202735.7
(22) Anmeldetag: 31.07.2000
(51) Int. Cl.: C09K 11/02, C09K 11/80

(54) **Plasmabildschirm mit beschichtetem Leuchtstoff**

(30) Priorität: 07.08.1999 DE 19937420
(71) Anmelder: Philips Corporate Intellectual Property GmbH, 52064 Aachen (DE); Koninklijke Philips Electronics N.V., 5621 BA Eindhoven (NL)
(72) Erfinder: Jüstel, Thomas, 52064 Aachen (DE); Ronda, Cornelis, Philips Corp Intel. Property GmbH, 52064 Aachen (DE); Weiler, Volker, Philips Corp Intell. Property GmbH, 52064 Aachen (DE)
(74) Vertreter: Volmer, Georg, Dipl.-Ing.

(57) **Zusammenfassung**

Plasmabildschirm mit einer Leuchtstoffzubereitung aus einem Leuchtstoff mit einer Beschichtung, die ein Phosphat MPO₄, wobei M ein Metall ausgewählt aus der Gruppe Al, Sc, Y, Lu, Gd und La ist, enthält. Diese Beschichtung ist wirksam gegen die thermische Degradation des Leuchtstoffes bei der Herstellung des Plasmabildschirms.

## Beschreibung

Die Erfindung betrifft einen Plasmabildschirm mit einer Leuchtstoffzubereitung aus einem Leuchtstoff mit einer Beschichtung.

Plasmabildschirme ermöglichen Farbbilder mit hoher Auflösung, großer Bildschirmdiagonale und sind von kompakter Bauweise. Ein Plasmabildschirm weist eine hermetisch abgeschlossene Glaszelle, die mit einem Gas gefüllt ist, mit gitterförmig angeordneten Elektroden auf. Durch Anlegen einer elektrischen Spannung wird eine Gasentladung hervorgerufen, die Licht im ultravioletten Bereich erzeugt. Durch Leuchtstoffe wird dieses Licht in sichtbares Licht umgewandelt und durch die Frontplatte der Glaszelle zum Betrachter emittiert. Dieser Prozeß ist ähnlich wie der in Leuchtstoffröhren, aber durch die kleineren Dimensionen der einzelnen Plasmaentladungen bei einem Plasmabildschirm ist die Umwandlung der elektrischen Anregungsenergie in sichtbares Licht sehr viel weniger effizient als es in Leuchtstoffröhren der Fall ist.

Als Leuchtstoffe für Plasmabildschirme werden Leuchtstoffe verwendet, die unter UV-Anregung besonders effizient sind. Häufig verwendete Leuchtstoffe sind zum Beispiel BaMgAl₁₀O₁₇:Eu (BAM) und (Ba,Sr,Ca)₅(PO₄)₃Cl:Eu (SCAP), die durch Europium im divalenten Zustand Eu²⁺ aktiviert sind. Es findet jedoch unter den rigiden Bedingungen während der Herstellung der Plasmabildschirme eine Degradation, d.h. eine Abnahme der Effizienz der Leuchtstoffe statt. Für das Aufbringen eines Leuchtstoffes in einem Bildschirm werden Suspensionen oder Druckpasten der Leuchtstoffe verwendet, denen organische Bindemittel und Dispersionsmittel zugesetzt sind. Die organischen Bindemittel erhöhen die Haftung der Leuchtstoffe auf dem Glas, während die Dispersionsmittel die Stabilität der Suspensionen erhöhen. Nach dem Aufbringen der Leuchtstoff-Suspensionen müssen die Hilfsstoffe entfernt werden. Dies erfolgt durch eine thermische Behandlung bei einigen hundert Grad Celsius und gleichzeitiger Anwesenheit von Sauerstoff, um die organischen Verbindungen zu oxidieren. Unter diesen drastischen Bedingungen kann auch der Aktivator Eu²⁺ zu Eu³⁺ oxidiert werden. Die Anwesenheit von Eu³⁺ in den Leuchtsroffpartikeln vermindert die Lichtausbeute, da Eu³⁺-Ionen die Excitonen abfangen und auf nicht strahlende Weise in den Grundzustand zurückkehren.

Aufgabe der vorliegenden Erfindung ist es, einen Plasmabildschirm mit einer Leuchtstoffzubereitung aus einem Leuchtstoff mit einer Beschichtung zu schaffen, die unter den Herstellungsbedingungen für Plasmabildschirme nicht degeneriert.

Erfindungsgemäß wird die Aufgabe gelöst durch einen Plasmabildschirm mit einer Leuchtstoffzubereitung aus einem Leuchtstoff mit einer Beschichtung, dadurch gekennzeichnet, daß die Beschichtung ein Phosphat der Zusammensetzung MPO₄ enthält, wobei M ein Metall ausgewählt aus der Gruppe Al, Sc, Y, Lu, Gd und La ist.

Diese Phosphate bilden besonders gute, geschlossene Filme mit dichter Oberfläche auf den Leuchtstoffen.

Es ist bevorzugt, daß der Leuchtstoff zusätzlich Eu²⁺ als Aktivator enthält.

Besonders die Eu²⁺-haltigen, blau emittierenden Leuchtstoffe erfahren aufgrund der drastischen Bedingungen während der Herstellung eines Plasmabildschirms eine Degradation.

Es kann bevorzugt sein, daß der Leuchtstoff ein Aluminatleuchtstoff ist.

Diese Leuchtsroffe sind besonders effiziente Leuchtstoffe unter UV- bzw. Vakuum-UV-Anregung. Außerdem ist ihre Oberfläche mit Hydroxylgruppen belegt, die mit den Phosphatanionen des Beschichtungsmaterials unter Wasserabspaltung reagieren können und für eine chemische Bindung zwischen Beschichtung und Leuchtstoff sorgen. Die Phospharbeschichtung liegt dadurch sehr nah an der Oberfläche der Leuchtstoffe.

Die Erfindung betrifft auch ein Verfahren zur Herstellung einer Leuchtstoffzubereitung aus einem Leuchrstoff mit einer Beschichtung aus Phosphaten der Zusammensetzung MPO₄, wobei M ein Metall ausgewählt aus der Gruppe Al, Sc, Y, Lu, Gd und La ist, bei dem
- zu einer wäßrigen Lösung eines Metallsalzes, wobei das Metall ausgewählt aus der Gruppe Al, Sc, Y, Lu, Gd und La ist, Phosphorsäure und Harnstoff gegeben wird,
- zu der Mischung ein Leuchtstoff gegeben wird und
- die Suspension erhitzt wird bis der pH-Wert bei 7 ist.

Mit Hilfe dieses Verfahren, bei dem der pH-Wert langsam durch Hydrolyse von Harnstoff erhöht wird, wird langsam MPO₄ ausgefällt und damit eine dichte und geschlossene Beschichtung des Leuchrstoffes erhalten.

Desweiteren betrifft die Erfindung auch eine Leuchtstoffzubereitung aus einem Leuchtstoff mit einer Beschichtung, die ein Phosphat der Zusammensetzung MPO₄ enthält, wobei M ein Metall ausgewählt aus der Gruppe Al, Sc, Y, Lu, Gd und La ist.

Diese Leuchtstoffzubereitung kann auch in einer Vorrichtung, die mit einem VUV-emittierenden Plasma arbeitet wie zum Beispiel eine Xenon-Entladungslampe, als Leuchtstoff eingesetzt werden.

Im folgenden soll anhand von zwei Figuren und zwei Ausführungsbeispielen die Erfindung näher erläutert werden. Dabei zeigt
- Fig. 1: den Aufbau und das Funktionsprinzip einer einzelnen Plasmazelle in einem AC-Plasmabildschirm und
- Fig. 2: die Lichtausbeute von beschichteten BAM vor und nach einer thermischen Behandlung in sauerstoffhaltiger Atmosphäre.

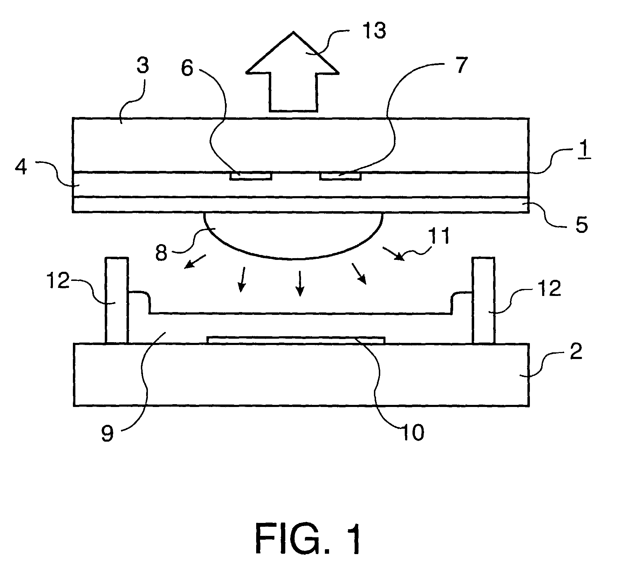

Gemäß Fig. 1 weist eine Plasmazelle eines AC-Plasmabildschirms mit einer koplanaren Anordnung eine Frontplatte 1 und eine Rückplatte 2 auf. Die Frontplatte 1 enthält eine Glasplatte 3, auf der eine dielektrische Schicht 4 und darüber eine Schutzschicht 5 aufgebracht sind. Die Schutzschicht 5 ist bevorzugt aus MgO und die dielektrische Schicht 4 ist beispielsweise aus PbO. Auf die Glasplatte 3 sind parallele, streifenförmige Entladungselektroden 6,7 derart aufgebracht, daß sie von der dielektrischen Schicht 4 bedeckt sind. Die Entladungselektroden 6,7 sind zum Beispiel aus Metall oder ITO. Die Rückplatte 2 ist aus Glas und auf der Riickplatte 2 sind parallele, streifenförmige, senkrecht zu den Entladungselektroden 6,7 verlaufende Adsesselektroden 10 aus beispielsweise Ag aufgebracht. Diese sind von Leuchtstoffschichten 9 in einer der drei Grundfarben rot, grün oder blau bedeckt. Die einzelnen Leuchtstoffschichten 9 sind durch vorzugsweise aus dielektrischem Material bestehende Trennwände 12, sogenannte Barrieren, getrennt.

In der Entladungszelle, als auch zwischen den Entladungselektroden 6,7, von denen jeweils eine als Kathode bzw. Anode wirkt, befindet sich ein Gas, vorzugsweise ein Edelgasgemisch aus beispielsweise He, Ne, oder Kr, mit Xe als UV-Licht generierender Komponente. Nach Zündung der Oberflächenentladung, wodurch Ladungen auf einem zwischen den Entladungselektroden 6,7 im Plasmabereich 8 liegenden Entladungsweg fließen können, bildet sich im Plasmabereich 8 ein Plasma, durch das vorzugsweise Strahlung 11 im UV-Bereich oder im VUV-Bereich erzeugt wird. Diese UV-Strahlung 11 regt die Leuchtstoffschicht 9 zum Leuchten an, die sichtbares Licht 13 in einer der drei Grundfarben emittiert, das durch die Frontplatte 1 nach außen tritt und somit einen leuchtenden Bildpunkt auf dem Bildschirm darstellt.

Die Eu²⁺-haltigen Leuchtstoffe, die gemäß der Erfindung mit einer stabilisierenden Beschichtung versehen werden, sind beispielsweise Ba₂SiO₄:Eu, BaMgAl₁₀O₁₇:Eu, (Sr,Mg)₂P₂O₇:Eu, Sr₄Al₁₄O₂₅:Eu, SrAl₂O₄:Eu, (Ba,Sr,Ca)₅(PO₄),Cl:Eu oder SrB₄O₇:Eu.

Die Leuchtstoffe können als Primärpartikel oder als Latex und Pigmenten gemischte Granulate vorliegen. Die Korngröße der Leuchtstoffpartikel ist nicht kritisch. Die Primärkorngröße handelsüblicher Leuchtstoffe liegt bei etwa 2 bis 20 µm. Die Leuchtstoffpartikel werden mit einer dünnen und gleichmäßigen Schicht aus MPO₄, wobei M ein Metall ausgewählt aus der Gruppe Al, Sc, Y, Lu, Gd und La ist, überzogen. Die Schichtdicke beträgt üblicherweise 0.001 bis 0.2 µm und ist damit so dünn, daß VUV-Photonen ohne wesentlichen Energieverlust durchdringen können.

Als Ausgangsverbindung für die Beschichtung werden lösliche Metallsalze der Zusammensetzung MX₃·yH₂O, wobei M eines der Metalle Al, Sc, Y, Lu, Gd, und La ist, X eines oder mehrere der Anionen CH₃COO⁻, RO⁻, NO₃⁻, ClO₄⁻ und Cl⁻ und y eine Zahl größer oder gleich Null darstellt, eingesetzt. Üblicherweise wird als Lösungsmittel Wasser verwendet. In diese Lösung wird Phosphorsäure, vorzugsweise 85%ige Phosphorsäure, und Harnstoff gegeben. Nachdem die erhaltene Lösung filtriert wurde, vorzugsweise durch einen dünnen Nylonfilter, wird das Leuchtstoffpulver hinzugefügt. Die Suspension wird unter Rühren erhitzt bis der pH-Wert der Suspension den Wert 7 erreicht. Nach Abkühlung auf Raumtemperatur wird der Leuchtstoff abfiltriert und gewaschen.

Je nachdem welches Verfahren zur Herstellung des Plasmabildschirms angewendet wird, werden die beschichteten Leuchtstoffzubereitungen entweder "trocken", d.h. als trockenes Pulver oder "naß", d.h. als Suspension, eingesetzt. Beim Einsatz in einem "Naßverfahren" braucht das Leuchtstoffpulver nach dem Beschichten nicht als trockenes Pulver isoliert zu werden, sondern wird noch feucht weiterverarbeitet. Es wird beispielsweise eine Suspension mit dem beschichteten Leuchtstoff hergestellt, der neben dem organischen Bindemittel und dem Dispersionsmittel auch ein Photoresist zugesetzt wird. Diese Suspension wird als Film auf einer Rückplatte 2 aufgebracht, getrocknet, durch eine Schattenmaske belichtet und die nicht belichteten Partien durch Waschen entfernt. Zur Entfernung der Waschlösung und der anderen Additive wird die Rückplatte 2 unter Sauerstoffzufuhr mehrere Stunden thermisch behandelt.

Anschließend wird die Rückplatte 2 zusammen mit weiteren Komponenten wie zum Beispiel einer Frontplatte 1 und einem Edelgasgemisch zur Herstellung eines AC-Plasmabildschirms verwendet. Grundsätzlich kann ein erfindungsgernäßer, beschichteter Leuchtstoff auch bei anderen Typen von Plasmabildschirmen, wie zum Beispiel bei Plasmabildschirmen mit Matrixanordnung oder DC-Plasmabildschirmen eingesetzt werden.

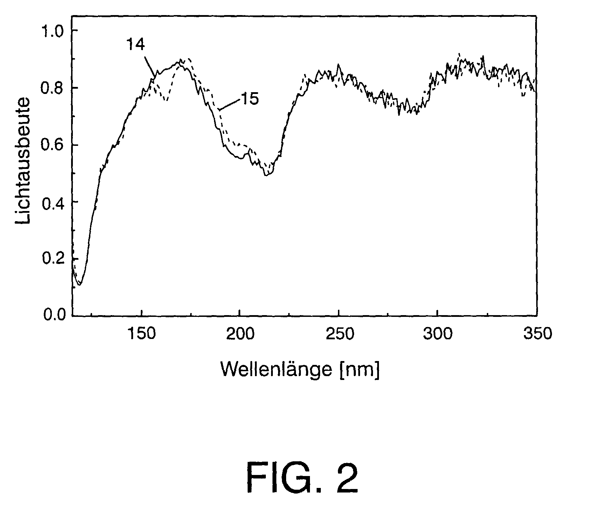

In Fig. 2 ist die Lichtausbeute von beschichtetem BaMgAl₁₀O₁₇:Eu vor und nach einer thermischen Behandlung in sauerstoffhaltiger Atmosphäre gezeigt. Dabei entspricht der Graph 14 der Lichtausbeute in Abhangigkeit von der Wellenlänge für BaMgAl₁₀O₁₇:Eu, welches mit AlPO₄ beschichtet ist. Der Graph 15 zeigt die Lichtausbeute in Abhängigkeit von der Wellenlänge des beschichteten Leuchtstoffes, nachdem dieser zwei Stunden thermisch bei 500 °C in sauerstoffhaltiger Atmosphäre behandelt wurde. Die Lichtausbeute ist kaum verändert nach der Behandlung.

Im folgenden werden Ausführungsformen der Erfindung erläutert, die beispielhafte Realisierungsmöglichkeiten darstellen.

### Ausführungsbeispiel 1

4.45 g Al(NO₃)₃·9H₂O wurden in 1.25 l deminetalisiertem Wasser gelöst. Zu dieser Lösung wurden 1.37 g 85%ige H₃PO₄ und 36.04 g Harnstoff gegeben. Nach Filtration des erhaltenen Gemisches durch einen 0.2 µm Nylonfilter wurden 50 g BaMgAl₁₀O₁₇:Eu hinzugefügt. Die Suspension wurde solange bei 90 °C gerührt bis der pH-Wert der Lösung 7 betrug. Die Suspension wurde auf Raumtemperatur abkühlen gelassen und der beschichtete Leuchtstoff wurde abfiltriert, mehrmals mit demineralisiertem Wasser gewaschen und bei 100 °C eine Stunde getrocknet.

Anschließend wurde eine Suspension des Leuchtstoffes hergestellt, der Additive wie ein organisches Bindemittel, ein Dispersionsmittel und ein Photoresist zugesetzt wurden. Diese Suspension wurde als Film auf einer Rückplatte 2 aufgebracht, getrocknet, durch eine Schattenmaske belichtet und die nicht belichteten Partien durch Waschen entfernt. Diese Prozeßschritte werden nacheinander für die anderen beiden Leuchtstoffrypen der Emissionsfarben Grün und Rot durchgeführt.

Durch thermische Behandlung der Rückplatte 2 bei 600 °C in sauerstoffhaltiger Atmosphäre wurden alle in den Leuchtstoffschichten 9 verbliebenen Additive entfernt. Eine derartige Rückplatte 2 wurde dann zum Bau eines Plasmabildschirms verwendet.

### Ausführungsbeispiel 2

4.45 g Al(NO₃)₃·9H₂O wurden in 1.25 l demineralisiertem Wasser gelöst. Zu dieser Lösung wurden 1.37 g 85%ige H₃PO₄ und 36.04 g Harnstoff gegeben. Nach Filtration der erhaltenen Lösung durch einen 0.2 µm Nylonfilter wurden 50 g (Ba,Sr,Ca)₅(PO₄)₃Cl:Eu hinzugefügt. Die Suspension wurde solange bei 90 °C gerührt bis der pH-Wert der Lösung 7 betrug. Die Suspension wurde auf Raumtemperatur abkühlen gelassen. Der beschichtete Leuchtstoff wurde abfiltriert, mehrmals mit demineralisiertem Wasser gewaschen und bei 100 °C eine Stunde getrocknet.

Anschließend wurde eine Suspension des Leuchtstoffes hergestellt, der Additive wie ein organisches Bindemittel, ein Dispersionsmittel und ein Photoresist zugesetzt wurden. Diese Suspension wurde als Film auf einer Rückplatte 2 aufgebracht, getrocknet. durch eine Schattenmaske belichtet und die nicht belichteten Partien durch Waschen entfernt. Diese Prozeßschritte werden nacheinander für die anderen beiden Leuchtstofftypen der Emissionsfarben Grün und Rot durchgeführt.

Durch thermische Behandlung der Rückplatte 2 bei 600 °C in sauerstoffhaltiger Atmosphäre wurden alle in den Leuchtstoffschichten 9 verbliebenen Additive entfernt. Eine derartige Rückplatte 2 wurde dann zum Bau eines Plasmabildschirms verwendet.

## Patentansprüche

1. Plasmabildschirm mit einer Leuchtstoffzubereitung aus einem Leuchtstoff mit einer Beschichtung,
dadurch gekennzeichnet,
daß die Beschichtung ein Phosphat der Zusammensetzung MPO₄ enthält, wobei M ein Metall ausgewählt aus der Gruppe Al, Sc, Y, Lu, Gd und La ist.

2. Plasmabildschirm nach Anspruch 1,
dadurch gekennzeichnet,
daß der Leuchtstoff zusätzlich Eu²⁺ als Aktivator enthält.

3. Plasmabildschirm nach Anspruch 1,
dadurch gekennzeichnet,
daß der Leuchtstoff ein Aluminatleuchtstoff ist.

4. Verfahren zur Herstellung einer Leuchtstoffzubereitung aus einem Leuchtstoff mit einer Beschichtung aus Phosphaten der Zusammensetzung MPO₄, wobei M ein Metall ausgewählt aus der Gruppe Al, Sc, Y, Lu, Gd und La ist,
dadurch gekennzeichnet,
daß
- zu einer wäßrigen Lösung eines Metallsalzes, wobei das Metall ausgewählt aus der Gruppe Al, Sc, Y, Lu, Gd und La ist, Phosphorsäure und Harnstoff gegeben wird,
- zu der Suspension ein Leuchtstoff gegeben wird und
- die Suspension erhitzt wird bis der pH-Wert bei 7 ist.

5. Leuchtstoffzubereirung aus einem Leuchtstoff mit einer Beschichtung, die ein Phosphat der Zusammensetzung MPO₄ enthält, wobei M ein Metall ausgewählt aus der Gruppe Al, Sc, Y, Lu, Gd und La ist.
